# EUROPEAN PATENT SPECIFICATION

(11) **EP 0 441 536 B1**
(45) Date of publication and mention of the grant of the patent: **09.10.1996**
(21) Application number: 91300780.3
(22) Date of filing: 31.01.1991
(51) Int. Cl.: H01R 13/66, H01R 13/453

(54) **Improvements relating to electrical appliances**
Verbesserungen in bezug auf elektrische Geräte
Améliorations relatives aux appareils électriques

(30) Priority: 31.01.1990 GB 9002135; 02.03.1990 GB 9004678; 24.04.1990 GB 9009166
(43) Date of publication of application: 14.08.1991
(60) Divisional application: 95107320.4
(73) Proprietor: OTTER CONTROLS LIMITED, Buxton, Derbyshire SK17 6LA (GB)
(72) Inventor: O'Neill, Robert Andrew, Buxton, Derbyshire (GB); Gaeta, Antonio Martin, Buxton, Derbyshire (GB); White, Ian Geoffrey, Buxton, Derbyshire (GB); Ettridge, Ian Geoffrey, Stourbridge, West Midlands (GB)
(74) Representative: Milhench, Howard Leslie

(56) References cited:
- EP-A- 0 067 730
- EP-A- 0 182 720
- EP-A- 0 332 445
- EP-A- 0 419 368
- GB-A- 2 209 633

## Description

### Field of the Invention:

This invention concerns improvements relating to electrical appliances and particularly electrical appliances of the so-called "cordless" type comprising an appliance proper and a base unit (or holder), in which electrical connection to the appliance proper is made by locating the appliance proper on a base unit connected to the mains electrical supply, the appliance proper and the base unit having co-operating connection systems operative to power the appliance proper via the base unit when the appliance proper is located on the base unit. Examples of such cordless appliances are electric smoothing irons, power tools and hot water jugs, kettles and like water heating vessels.

### Background of the Invention:

Various proposals have been made for the construction of the electrical connection systems of cordless appliances and, in so far as we are aware, all of such proposals have required the utilization of special (i.e. non-standard) connector parts on the appliance or of standard connector parts mounted in a special fashion. For example in EP-A-0332445 (D.H. Haden Ltd.) there is described an electric kettle wherein the connector of the kettle is mounted in the base of the kettle rather than in a side wall of the kettle as would conventionally be the case. In GB-A-2215920 (D.H. Haden Ltd.) there is described yet another arrangement where specially configured connector parts can be selectively coupled either to the appliance or to its stand so that the appliance can be used selectively in a corded or a cordless manner. Other special connector arrangements are described in GB-A-2208336 (Strix Ltd.) where special connector parts are coupled to the standard terminals of an electrical appliance, namely a hot water jug, to enable it to be utilized in a cordless fashion, and in GB-A-2208332 (Strix Ltd.), GB-A-2209633 (Strix Ltd.) and EP-A-0342050 (Strix Ltd.). These prior proposals illustrate the considerable efforts that have been made to design special connector systems for cordless appliances.

Another problem of conventional cordless appliance base units is that they are generally constructed as two plastics mouldings secured together to form a cavity within which means for securing the power supply cable are located. These means typically take the form of ribs designed to form a meander in the cable which prevents movement of the cable should it be pulled away from the base. The use of two plastics mouldings necessitates two sets of moulding tools and requires a number of fastening devices arranged to ensure that the two mouldings cannot become separated during use, since this would expose live electrical parts. Because of the relatively large area and flat section of these mouldings, distortion of the mouldings is likely to occur and hence numerous fasteners, typically four to six, are required. The connector part of such base units is typically clamped or secured by means of further fasteners between the two mouldings and protrudes from the mouldings to facilitate the access of the appliance proper connector to the base unit connector. Such a system of construction is expensive in tooling, expensive in materials, and expensive in manufacturing time.

Reference may also be made to EP-A-0 419 368 which belongs to the state of the art under Article 54(3) and (4) EPC insofar as Germany, France and Great Britain are concerned.

### Summary of the Invention:

The present invention is set forth in the appended claims which, in view of EP-A-0 419 368 and its Article 54(3) and (4) status, comprise two different sets of claims, one for Germany, France and Great Britain, and the other for the other designated countries. It will be seen that, as compared to the prior art arrangement of GB-A-2 209 633 for example which employs additional connector parts adapted to be fitted over the conventional horizontal terminal pins of an electrical appliance so as to provide a vertically oriented pin set for co-operation with a base connector, the present invention as set forth in claim 1 of the appended claims for all country designations other than Great Britain, France and Germany provides a base connector in which the conventionally horizontal terminal pins of the appliance can enter the base connector upstand when such pins are moved generally transversely to their length, ie. generally vertically, and having entered the upstand can be engaged by the spring terminals provided therein. It will furthermore be seen that, as compared to the prior art arrangement of EP-A-0 419 368 which belongs to the state of the art under Article 54(3) and (4) insofar as Great Britain, France and Germany are concerned, the present invention as set forth in claim 1 of the appended claims for Great Britian, France and Germany, provides that the cantilevered leaf springs that are provided in the base connector upstand for contacting the ends of the appliance terminal pins are arranged to co-operate with the shutter(s) of the shuttered apertures in the upstand such that as the shutter(s) are displaced so the spring terminals are moved into contact with the terminal pins.

As will hereinafter be explained, the present invention, at least insofar as concerns all designaged countries other than Great Britain, France and Germany, resides in the appreciation that it is not in point of fact necessary to design special connector systems for cordless appliances and that, with appropriate design of the base unit, connection can readily be made to a conventional connector provided on the appliance proper. As will be explained in the following, the present invention can give rise to significant cost savings in manufacture, particularly where the appliance proper is fitted with protective control which incorporates a standard electrical power connector. The invention also enables the appliance proper to be used in a corded or cordless manner as desired.

In an embodiment of the present invention which is described hereinafter therefore, an electrical appliance of the cordless type comprises an appliance proper and a base unit wherein the appliance proper has a standard power supply connector provided with its terminal pins horizontal (or substantially so), as is conventional for corded appliances, and wherein the base unit has a co-operating connector adapted to make electrical connection to the terminal pins of the appliance proper when it is seated on the base. As will be appreciated, such an arrangement is advantageous furthermore in that the appliance proper can be used as desired in a corded or cordless manner.

More particularly, the embodiment of the invention which will be described in detail hereinafter is, a cordless water heating appliance comprising a vessel part and a base part and having its vessel part fitted with an X12 element protection device manufactured by us, the X12 device being substantially as described in GB-A-2194099 (Otter Controls Ltd.) with reference particularly to Figures 3A, 3B and 3C thereof, but with the lower shelf part of the socket inlet shroud omitted to facilitate access to the terminal pins. The base part has a connector comprising shuttered spring terminals housed within an upstand which is adapted to mate with the X12 socket inlet shroud when the vessel part is located on the base. The shutter serves to prevent access to the spring terminals when the vessel part is removed from the base and is advantageously arranged to be displaced when the vessel part is seated on the base so as to permit the spring terminals to move into contact with the X12 terminal pins, the earth terminal pin of the X12 device moving the shutter against spring bias as the vessel is seated on the base. The movement of the spring terminals in the base into contact with the X12 terminal pins is arranged to be generally in a horizontal direction which has the advantage that the integrity of the connections made between the spring terminals in the base and the X12 terminal pins is substantially independent of the weight of the vessel part; in previous proposals this has not generally been the case and defective connections have resulted.

The aforementioned X12 element protection device includes thermally-responsive switch means arranged to be responsive to the temperature of the heating element of an electrically heated water boiling appliance and adapted to disconnect the appliance heating element from its power supply in a sensed element overtemperature condition. More particularly, the thermally-responsive switch means in the X12 device includes a bimetal mounted in a thermally-collapsible carrier, the bimetal being responsive to a predetermined element overtemperature condition to open a set of switching contacts through the intermediacy of a push-rod, and the carrier serving a secondary or back-up control function to open circuit the connection between the terminations of the appliance heating element and the X12 device terminals in the event of failure of the primary bimetal control. Furthermore, the X12 device provides a facility described in British Patent Application No. GB-2212664 (Otter Controls Ltd.) for connecting a steam sensor switch to the X12 device, the steam sensor switch serving to disconnect the supply of power to the appliance heating element when water boils in the appliance.

The X12 device is a fairly complex device having superlative characteristics and is well suited to the provision of element protection and boil sensing functions in an electrically heated water boiling appliance. However, for some applications the complexity of the internal switch mechanisms of the X12 device may be unnecessary or undesirable. The present invention enables the internal push-rod actuated switching contacts of the X12 device to be omitted from such a device adapted for use in a cordless appliance, and enables the push-rod to be extended through the device and arranged to act upon the live and/or neutral spring terminals of the base connector part of the cordless appliance so that the electrical connection of the powered base part of the appliance to the appliance part is dependent upon the condition of the thermally-responsive bimetal of the X12 device. In similar fashion, as the X12 device has provision for the attachment thereto of a steam sensing switch, so the present invention enables a steam sensor in the appliance part to be arranged to act through a mechanical linkage (a Bowden cable for example) upon the spring terminals provided in the base connector part.

More generally, therefore, in accordance with a preferred feature of the present invention an appliance of the cordless type has power connection terminal pins on the appliance part arranged to co-operate with terminal springs provided in a base unit or other mating part for supplying power to the appliance part, and a control is provided on the appliance part and is arranged through the intermediacy of a mechanical linkage to determine the capability of the terminal pins and terminal springs to supply power to the appliance part. Differently stated, the appliance part of the cordless appliance has a protective control and the same contacts as are used to supply power through the base unit to the appliance part are also used to perform circuit disconnection as a result of the functioning of the protective control.

It is particularly to be understood that the last-mentioned feature of the present invention is not limited to modification of the X12 control, but rather is capable of much wider application. Furthermore, whilst the invention is seen as having particularly advantageous application to cordless type water heating appliances wherein the control provided in the appliance proper is an element overtemperature protection device and/or a steam sensing device, the invention is to be clearly understood to have wider application for example to cordless smoothing irons, power tools, etc. Additionally, whilst the X12 control has its own terminal pins and might be modified by provision of one or more push rods running alongside, or through passages in, the terminal pins and adapted to determine the coupling between the tips of the terminal pins and the terminal springs in the connector in the base part of the appliance, it is clearly within the ambit of the present invention that the terminal pins do not constitute an integral part of the control but rather are separate therefrom. Clearly, furthermore, it is possible for the control provided in the appliance part to operate on either or both of the current carrying terminal pins.

The present invention additionally concerns the provision of a means for securing a power supply cable to the base unit connector part of a cordless electrical appliance in such a way that compliance with international standards relating to cable security on appliances (eg. BS 3456) may be readily and inexpensively assured, contrary to the prior art arrangements hereinbefore described. In accordance with this aspect of the teachings of the present invention, the connector of the base unit is preferably formed as a unitary structure adapted to be received within an accommodating cavity provided in the base unit and secured thereto by a minimum number of separate fasteners, and a cable clamping arrangement is provided as an integral part of a plastics moulding forming part of the base unit connector.

The above and additional features of the invention are set forth with particularity in the appended claims and will be best understood from consideration of the following detailed description of exemplary embodiments which is given with reference to the accompanying drawings.

### Brief Description of the Drawings:

Figure 1 is a schematic side view, partly in section, showing an X12 control as manufactured by us fitted to a water heating vessel, and showing the cooperating connector part of an exemplary base unit, the X12 control and the connector part of the base unit being shown spaced apart from each other one above the other;
Figure 2 shows the X12 control and the base unit connector part shown in engaged condition;
Figure 3 is a schematic end elevation view illustrating the co-operation of the terminal pins of the X12 control with the spring terminals in the base unit connector part;
Figures 4A and 4B are enlarged scrap perspective views showing details of the shuttering of the base unit connector part;
Figures 5A and 5B are front and rear exploded views illustrating in detail the construction of a base unit connector part similar to that of the foregoing Figures;
Figures 6A, 6B, 6C and 6D are different plan, elevation and perspective views of the base unit connector part shown in Figure 5;
Figure 7 shows a bottom plan view of a further embodiment of a base unit connector according to the present invention which incorporates an integral cable clamp;
Figure 8 shows a side elevation view of the base unit connector of Figure 7;
Figure 9 shows a perspective view of the base unit connector of Figure 7;
Figure 10 is a perspective view showing how the base unit connector of Figures 7 to 9 is adapted to be mounted into a cavity formed in a moulded plastics base;
Figures 11A and 11B are views showing the underside of a base unit connector similar to that of Figures 7, 8 and 9 but with a different form of cable clamp, Figure 11A showing use of the connector with a round three-core cable and Figure 11B showing use of the connector with a flat three-core cable; and Figure 12 shows a perspective view of the underside of the base unit of Figures 11A and 11B.

### Detailed Description of the Embodiments:

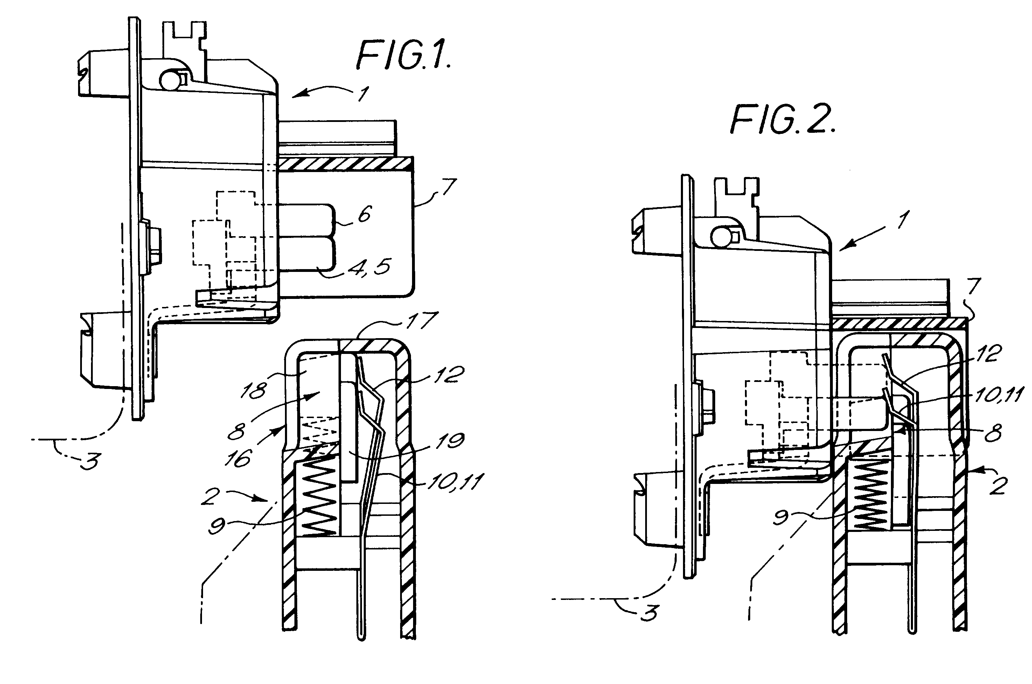

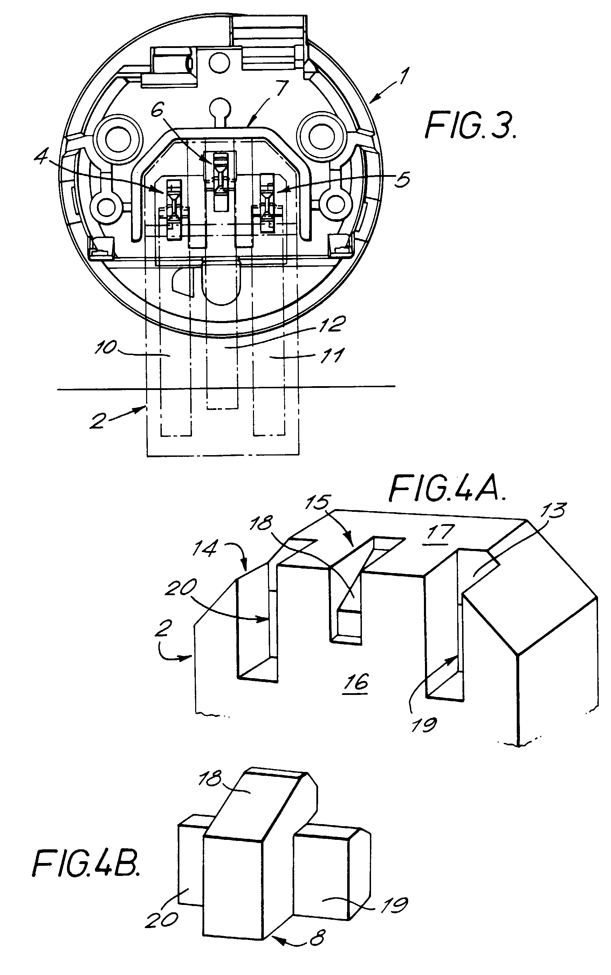

Referring first to Figure 1, an X12 device is designated 1 and a co-operating base unit connector part is designated 2. As abovementioned, the X12 device 1 is substantially as described in GB-A-2194099 with reference to Figures 3A, 3B and 3C thereof, and as shown in Figure 1 hereof is attached in conventional manner to a side wall of a schematically-illustrated water heating vessel 3. As is described in GB-A-2194099, the X12 device has the function of interrupting the supply of electrical power to a heating element within the vessel 3 in the event of an element overtemperature condition occurring, for example as a result of the vessel being powered without there being any water in it. The means whereby this protective function is achieved is not especially material to the present invention and will not be described further herein at this point. All that need be said in this regard is that the X12 device 1 has live, neutral and earth terminal pins 4, 5 and 6 within a hooded or open-based socket inlet shroud 7 and incorporates within the body of the device thermally-responsive switch means for interrupting the electric circuit from the live and neutral pins 4, 5 to the vessel heating element in the event of an element overtemperature condition.

The arrangement of the terminal pins of the X12 device and of the socket inlet shroud is fully conventional and enables the vessel 3 to be used in a corded manner, if desired, with a standard 10 amp kettle type connector plug (not shown) plugged into the socket inlet shroud 7 and making contact with the terminal pins. This arrangement is adapted also to enable the vessel to be used in a cordless manner with a base unit incorporating the illustrated connector part 2 as will now be described.

The connector part 2 comprises a moulded plastics upstand from the base part of the appliance which is shaped to mate with the socket inlet shroud 7 of the X12 device 1 when the vessel part of the appliance is set down onto the base. Although not illustrated in the drawing, it will be understood that the vessel and/or the base part of the appliance may include formations designed to ensure proper mating of the connector part 2 with the socket inlet shroud 7 of the X12 device 1 when the vessel part is seated on the base. Within the connector part 2 there is provided a moulded plastics shutter 8 which is spring biassed towards a closed position by means of a coil spring 9, and three leaf-spring terminals 10, 11 and 12 which couple within the base unit 2 to the live, neutral and earth conductors of a power supply cord and are adapted to contact the live, neutral and earth terminal pins 4, 5 and 6 respectively when the vessel part 3 is seated upon the base and the shutter 8 is displaced to an open position.

Figures 4A and 4B are perspective views showing, to an enlarged scale, the upper part of the forward face of the connector part upstand 2 which is provided with recesses 13, 14 and 15 for accommodating the terminal pins 4, 5 and 6 of the X12 device, and showing, likewise to an enlarged scale, the general shape of the shutter 8. The recesses 13, 14 and 15 each open onto the forward and upper faces 16 and 17 of the upstand 2, as may best be seen in Figure 4A, and the shutter 8 has a central part 18 which cooperates with the earth pin recess 15 and is biassed upwards by the coil spring 9, as best seen in Figure 1, and side parts 19 and 20 which co-operate with the live and neutral pin recesses 13 and 14. The central part of the shutter presents a forwardly inclined upper surface towards the upper face 16 of the connector part upstand 2 to be contacted by the earth pin 6 of the X12 device 1 as the vessel 3 is lowered onto the base and urged downwardly against the action of coil spring 9. The side parts 19 and 20 of the shutter serve to close off respective openings that are provided in the rear walls of the recesses 13 and 14 when the shutter is in its uppermost, closed position, and it will be seen that the configuration of the shutter and its cooperation with the recesses 13 and 14 is such that the shutter will not open in response to forces applied vertically or horizontally within the line and neutral recesses. The shutter can only be opened by a force applied to its central part 18, and when it is urged bodily downwards by the action of the earth pin of the X12 device descending onto the central part 18, the openings in the rear walls of the recesses 13 and 14 are cleared by the side parts 19 and 20 of the shutter so as to enable the leaf springs 10 and 11 to move into contact with the ends of the live and neutral terminals 4 and 5 of the X12 device. In similar manner, the descending central part 18 of the shutter clears an opening in the back of the recess 15 and enables the earth leaf spring 12 to move into contact with the end of the earth terminal 6 of the X12 device. A comparison of Figures 1 and 2 will show the different positions adopted by the leaf springs 10, 11 and 12 when the shutter 8 is in its closed and open positions, and it is to be noted that the action of the shutter in closing moves the live parts away from the exposed surface of the connector to a distance which can readily meet international standards.

As can be seen from Figure 1, when the shutter 8 is in its upper, closed position the uppermost tips of the leaf springs 10, 11 and 12 press against the rear of the shutter. Stated differently, the closing shutter 8 urges the leaf springs 10, 11 and 12 backwards against their own resilience. The spring force of the leaf springs 10, 11 and 12 will thus oppose the initial opening movement of the shutter, but after this initial movement will, by virtue of the shape of the leaf springs, assist the shutter opening. This interactive arrangement of the shutter motion and the leaf spring force is advantageous since it allows a robust shutter closing spring force to be used which discourages improper operation of the shutter. The shutter can yet be freely opened by the weight of the appliance, after an increased initial force which can be developed by the impact of the earth terminal pin of the X12 device with the shutter. The respective spring forces can be selected to obtain the desired combination of initial force and ease of shutter opening.

The connection system as thus described makes use of the horizontal terminal pins 4, 5 and 6 which are a component of the X12 element protector itself. These pins are arranged in the standard layout of a 10 amp connector and preferably are of standard cross-section. They may be of standard length, or longer or shorter, and may be plated or unplated, or provided with a silver contact on their tips, as required. Since the pins are in a standard layout, they enable the X12 unit (or whatever other standard element protection unit may be employed) to be utilized in its standard form, which enables standard control assembly means and methods to be employed thus minimizing capital and other costs.

A preferred form of terminal pin providing excellent electrical characteristics in combination with superior wear characteristics comprises a copper pin, or a pin formed from a copper alloy having a thermal conductivity at least 90% that of copper, provided with a thick plating layer of silver and antimony. If a common brass pin with a 5 micron layer of essentially pure silver plating is used then the life of the contact effected by the pin to the base unit connector springs is around 1000 cycles of connection and disconnection. This may be increased to around 5000 cycles by use of a plating of 40 microns of essentially pure silver. This life may further be increased by use of a pin made from copper or a high thermal conductivity copper alloy, but a side effect is the formation of silver powder caused by abrasion of the contact surfaces which may lead to premature electrical breakdown. By the use of a plating of at least 30 microns and preferably 40 microns thickness comprising silver with a small amount of antimony, typically about 1% and particularly between 0.3% and 0.7%, on a pin formed of copper or a high thermal conductivity copper alloy, the formation of silver powder is inhibited and a life of about 70,000 cycles may be obtained. A silver antimony plating may be used to improve the performance of a brass pin, and a copper or high thermal conductivity copper alloy pin also obtains improved performance as compared to a brass pin, but the best results are obtained when these two improvements are combined. Accordingly the preferred form of control pin for cooperation with a base unit connector as herein described is a pin formed of copper or of a copper alloy having a thermal conductivity at least 95% and preferably 99% that of 99.95% pure copper, and having a plating layer of at least 30 microns and more preferably 40 microns thickness comprising fine silver (99.9% purity) with the addition of about 1% and more preferably between 0.3% and 0.7% of antimony.

The socket inlet shroud 7 of the X12 device provides a watershedding function to protect against ingress of water to electrically live parts of the appliance, and also serves in part to guide the vessel and base parts of the appliance into proper seated relationship which obviates or reduces the need for additional guidance components with resultant cost advantages. The design of the base connector part 2 also achieves a watershedding function with the vertical arrangement of the shutter and the arrangement of the recesses 13, 14 and 15 furthermore protecting the electrical components within the base connector part from moisture ingress.

The base connector part 2 has pin receiving recesses 13, 14 and 15 which open onto two adjacent faces of the connector, as described hereinbefore, and these enable the vessel part of the appliance to be engaged and disengaged from the base over a wide range of angles without risk of binding of the two parts in use. The fact that the contact forces between the terminal pins of the X12 device and the leaf springs in the base connector are generally horizontally directed also assists in this regard and has the further advantageous result that the contact force is not dependent on the weight of the vessel part of the appliance and is not applied until the two parts are fully (or almost fully) engaged. Hitherto, conventional arrangements have commonly been such that the weight of the appliance is required to overcome the closing force of the shutter and to provide contact forces for three connections and, particularly in the case of plastics bodied vessels of fairly light weight construction, contact forces have tended to be low. In contrast, the arrangement of the present invention provides for high contact forces which are advantageous for the safe functioning of the appliance, lessening the risk of overheating of the current conducting parts. Because the contact forces are developed only when the two parts are fully or almost fully engaged, any frictional effects which might otherwise inhibit the free operation of the connection system are minimised. In the present arrangement, there will additionally be a wiping or sliding action in the making of the contacts between the ends of the terminal pins of the X12 unit and the leaf springs in the base connector part and this sliding action is useful in avoiding contamination of the contacts.

The arrangement according to the invention thus provides for a cordless connection system which has no intermediate components between the control that is provided on the vessel and the contacts that are provided on the base, whilst at the same time enabling a standard form of corded appliance to be readily converted to cordless with minimal component changes. The vertical aspect of the terminal springs used in the base connector part also leads to a very compact construction which can be totally contained within the plan view of the control provided on the appliance proper, and this feature contributes to the minimizing of component changes as between corded and cordless variants of the same appliance design. Furthermore, the long thin design of the cantilevered contact springs in the base connector means that the stresses within the springs are of less value, so that low cost brass or the like may be used for their construction.

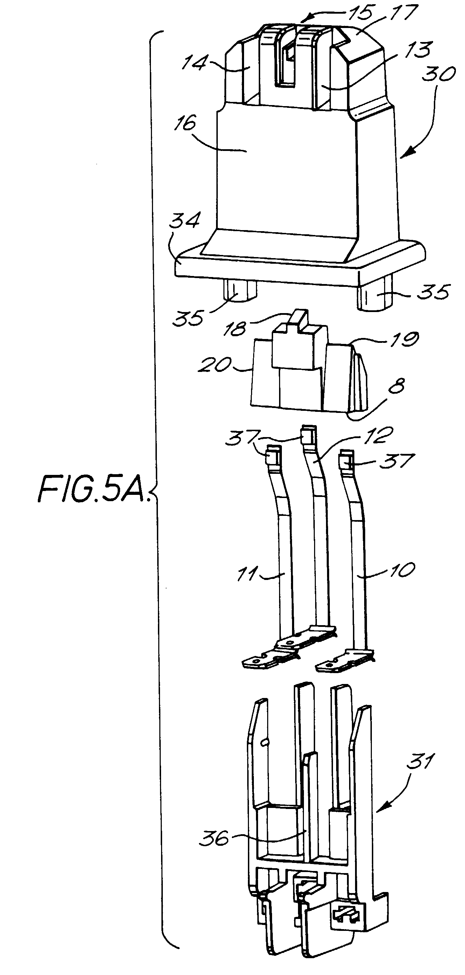

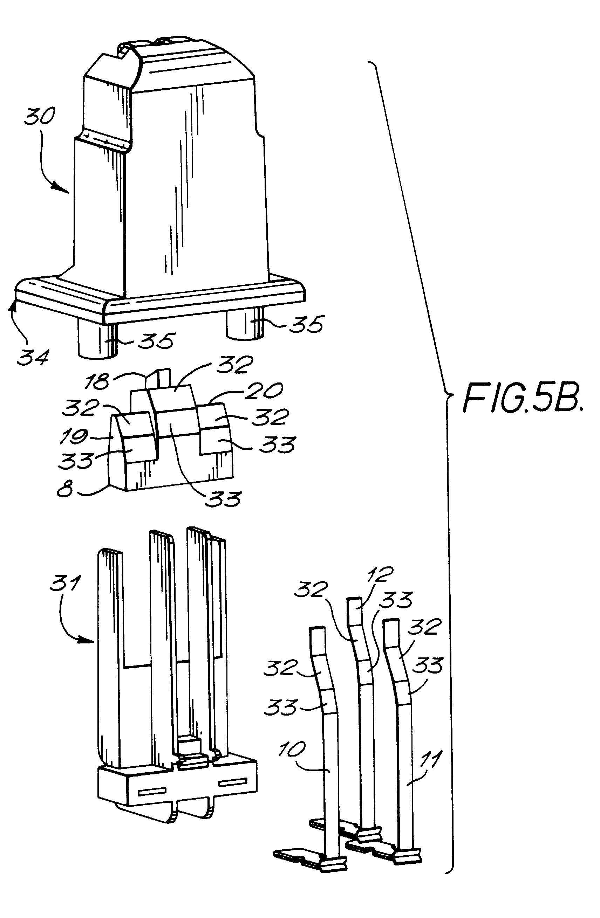

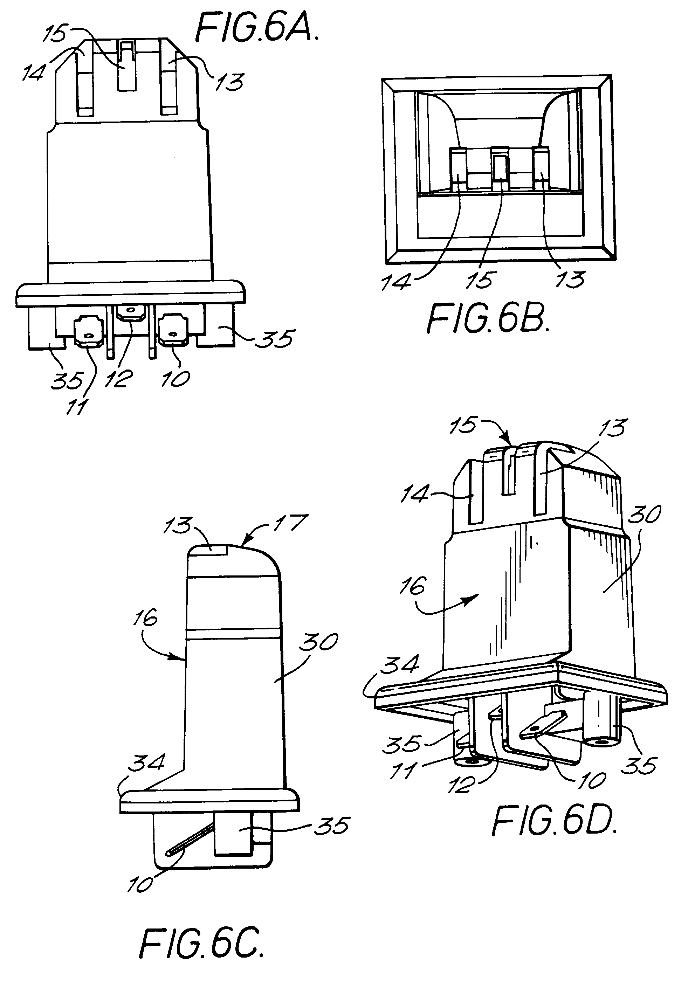

Figures 5A and 5B, and the various views of Figure 6 show the detailed internal and external construction of a base unit connector part upstand which is generally as described in the foregoing and has like parts identified by the same reference numerals. As shown, the upstand has recesses 13, 14 and 15 for accommodating the terminal pins 4, 5 and 6 of an X12 device or of any other device having a similar terminal pin layout, the recesses 13, 14 and 15 each opening onto the forward and upper faces 16 and 17 of the upstand. The shutter 8 has a central part 18 which co-operates with the earth pin recess 15 and is biassed upwards by the coil spring 9, and side parts 19 and 20 which co-operate with the live and neutral pin recesses 13 and 14. The central part of the shutter presents a forwardly inclined upper surface towards the upper face 16 of the connector part upstand to be contacted by the earth pin 6 of the X12 device 1 as the vessel 3 is lowered onto the base and urged downwardly against the action of coil spring 9. The side parts 19 and 20 of the shutter serve to close off respective openings that are provided in the rear walls of the recesses 13 and 14 when the shutter is in its uppermost, closed position, and when the shutter is urged bodily downwards by the action of the earth pin of the X12 device descending onto the central part 18 of the shutter, these openings are cleared by the side parts 19 and 20 of the shutter so as to enable the leaf springs 10 and 11 to move into contact with the ends of the live and neutral terminals 4 and 5 of the X12 device. In similar manner, the descending central part 18 of the shutter clears an opening in the back of the recess 15 and enables the earth leaf spring 12 to move into contact with the end of the earth terminal 6 of the X12 device.

As may be clearly seen from Figures 5A and 5B, the base connector part comprises a moulded plastics housing part 30 into which there is fitted a moulded plastics member 31 which serves as a mounting carrier for the leaf springs 10, 11, 12 and has wall portions which define within the interior of the housing part 30 appropriate accommodation for the shutter 8, for its biasing spring 9, and for the leaf springs 10, 11, and 12, ensuring proper clearances, shielding and screening between electrical parts. The leaf springs 10, 11, 12 are formed as metal pressings and have integral terminal parts adapted to be received in slots formed in the carrier 31 and then bent downwardly as may be seen in some of the views of Figure 6. The co-operating, complementary shapes of the upper ends of the leaf springs 10, 11, 12 and the rear surfaces of the shutter 8 upon which they bear can be clearly seen in Figure 5B where complementary flats on the shutter and on the springs are designated 32 and complementary radiussed portions are designated 33. Also of note in Figures 5A and 5B, and in the various views of Figure 6, is the provision of a water-shedding skirt 34 around the base of the housing 30, the provision of mounting elements 35 for accepting mounting screws, the provision of a post 36 on which the spring 9 seats, and the provision of silver contacts 37 on the ends of the leaf springs 10, 11, 12 for enhanced long-life switching operations.

The base unit connector described with reference to Figures 5A and 5B and the various views of Figure 6 is a practical realization of the schematically illustrated arrangement of the preceding Figures and obtains all of the heretofore described advantages thereof.

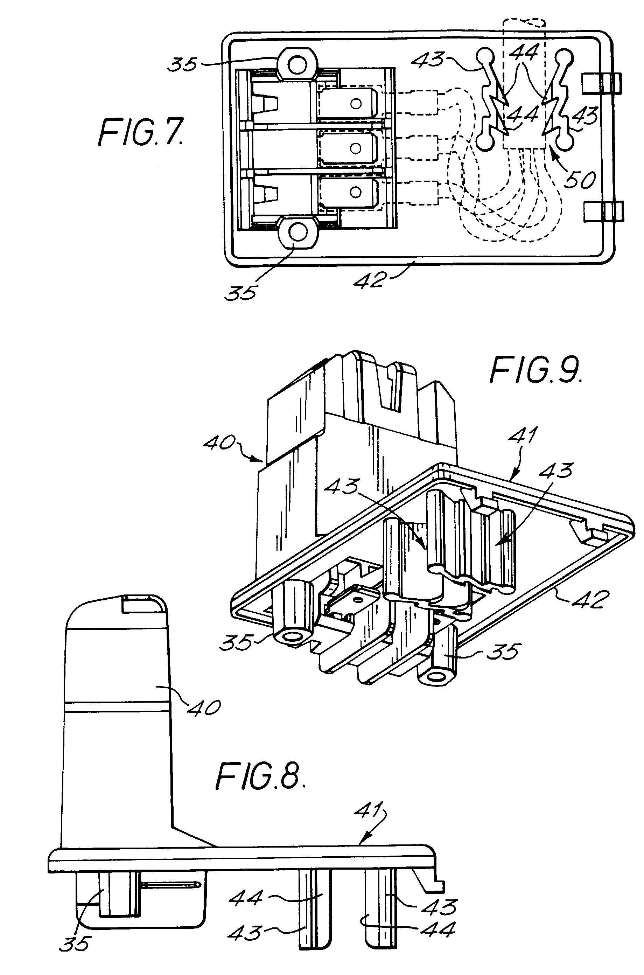

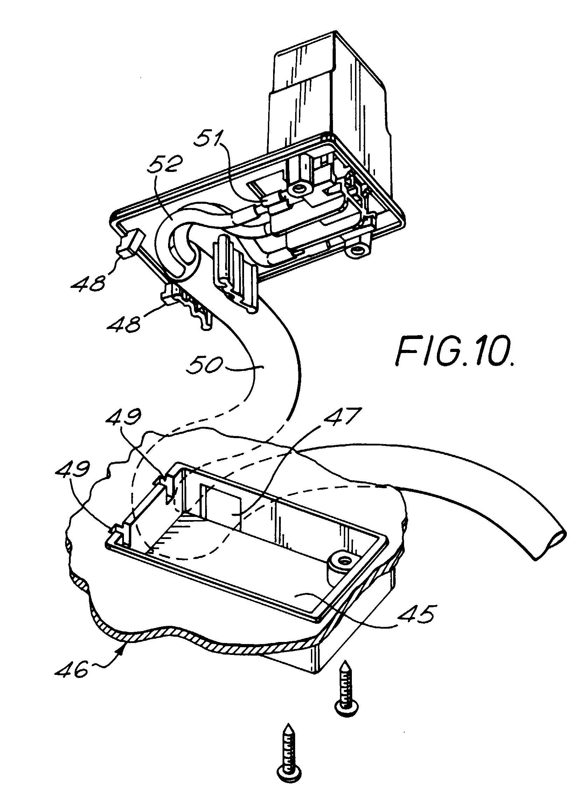

Referring now to Figures 7 to 10 these show a basic connector assembly 40 which is as described in the foregoing but with the connector provided with an extended skirt 41 which incorporates an integral cable clamp. The skirt has a water shedding edge 42 which is adapted to overlap the edge of an accommodating aperture provided in the base moulding. On the underside of the skirt 41 there are provided two integrally formed ribs 43 which form a cable securing means. As can be seen in Figures 7 and 10, the cable 50 is forced between the ribs 43 and is gripped by teeth 44 provided on the ribs which prevent the cable from being pulled lengthwise out of the cable clamp. Suitable receptacles 51 (see Figure 10) are provided on the stripped ends of the cable cores 52 to make connection to the electrical terminals of the base unit connector.

In Figure 10 the connector is shown positioned above a cavity 45 formed in a one-part base moulding 46. This cavity may have mating forms (not shown) to enhance the action of the ribs 43 in securing the cable. The cavity is also provided with a smooth orifice 47 for the exit of the cable 50. The base unit connector is arranged to be secured to the base moulding by the provision of lugs 48 on the connector skirt which engage with apertures 49 in the base moulding and by means of two screws which enter the holes provided in the mountings posts 35. The remaining part of the underside of the base moulding may, if desired, be provided with a set of ribs or bosses or other means (not shown) in order to provide a means of adjusting the free length of the cable.

The arrangement thus described provides a ready and convenient means of coupling the electrical power supply cable or a cordless appliance directly to the base unit connector part, and a ready and convenient means of coupling such base unit connector part to a base unit formed as a one piece moulding. Only two screw fasteners are required in order to secure the connector part to the base unit and the resulting assembly is rigid and not susceptible to distortion.

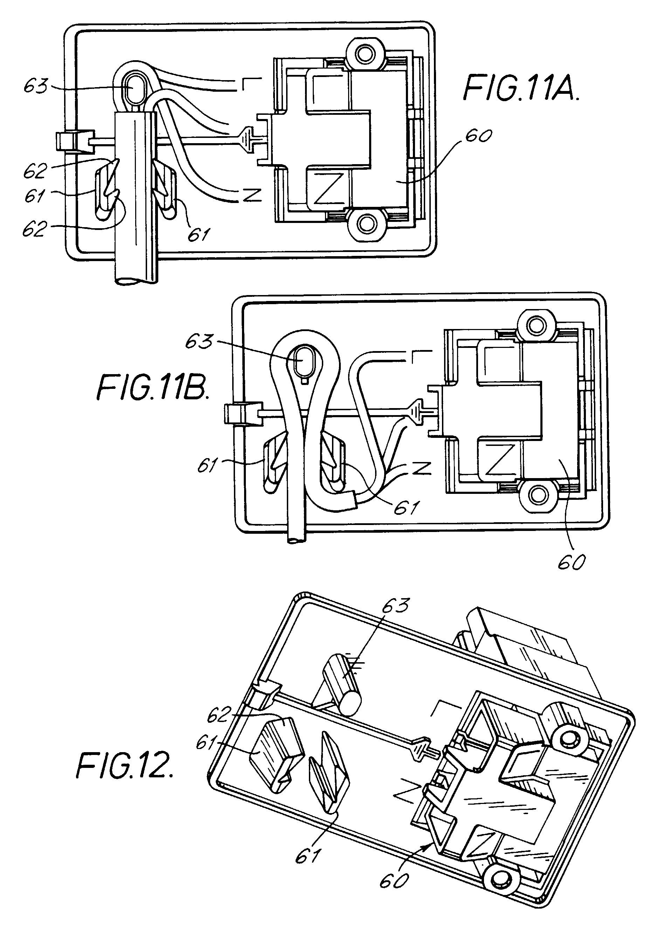

Figures 11A, 11B and 12 illustrate a further base unit connector similar to that just described but with a modified form of cable clamp and with the terminal parts of the contact springs of the connector screened within an integrally moulded part 60 of the internal moulding of the connector. As shown, the cable clamp comprises opposed formations 61 moulded integrally with the extended skirt portion of the connector and provided with teeth 62, and a post 63 spaced forwardly from the formations 61. Figure 11A shows how the cable clamp operates with a round three-core cable with two of the cable cores being wrapped around the post 63, and Figure 11B shows how the cable clamp operates with a flat three-core cable in which case the cable itself is looped around the post 63 and doubled back through the bite defined between the opposed toothed formations 61.

Having thus described the invention with particular reference to several embodiments, it is to be well appreciated that the described embodiments are exemplary only and that modifications and variations can be made without departure from the scope of the invention. For example, whilst the orientation of the connector parts shown for the described embodiments achieves the most advantages, the system could be adapted to other orientations with connector pin axes ranging from horizontal to vertical. Furthermore the vertical aspect of the base connector part could be retained, but with the appliance terminal pins inclined to the horizontal.

A modification of the above-described arrangements has been previously mentioned herein, primarily in the context of modification of the X12 device. In the X12 device as currently manufactured and substantially as described in GB-A-2194099 aforementioned herein, a snap-acting bimetal blade is held in a carrier which is urged against the rear surface of the head plate of a heating element when the X12 device is assembled to the heating element. The bimetal blade is coupled by means of a push-rod to a pair of switch contacts within the body of the X12 device so that in response to the bimetal sensing an element overtemperature condition and snapping to its opposite configuration the switch contacts will be opened by the push-rod thereby disconnecting the heating element from its power supply. The carrier is furthermore formed of a plastics material which will melt when subjected to a predetermined excess temperature and the X12 control is arranged so that, if such an excess temperature occurs and the carrier begins to melt, the connections that are made within the control to the live and neutral terminal pins of the control by means of leaf springs provided in the control will be broken. The action of the bimetal thus provides a primary control level and the provision of the melting carrier provides a secondary or back-up control level which becomes operative in the event of the primary control failing to operate. A further feature of the X12 control which is disclosed in GB-A-2212664 (Otter Controls Ltd) is that it includes a port providing access to spring connections within the control and enabling a steam sensor switch, for example, to be plugged into the control, either directly or via a lead, so that the control will automatically switch off the supply of electrical power to the appliance heating element when water boils in the appliance.

The modification of the X12 control that is proposed in accordance with this aspect of the present invention is to eliminate the push-rod actuated switch contacts from within the control and, in effect, to extend the push-rod through the control so that it acts instead upon the contact made between one or both of the live and neutral terminal pins of the control and the co-operating leaf springs in the base connector part. The bimetallic blade in the control would thus operate to determine whether or not the leaf springs in the base connector part could contact their respective co-operating terminal pins on the appliance part when the appliance is seated on the base; in this regard, it is of course the case that the protective functions of the X12 control are performed only when the appliance is seated on its base because it is only then that the heating element of the appliance can be powered.

The extension of the push-rod from the bimetal through the control could be a simple modification of the X12 device with appropriate rearrangements of its internal construction to allow passage of the extended push-rod which might exit the control and extend alongside the respective terminal pin (or pins) or through a passage formed in the terminal pin (or pins). The facility whereby a steam sensor can be coupled to the X12 device could similarly be modified such that the steam sensor is coupled to the modified device via a mechanical linkage, such as a Bowden cable for example, so that the sensing of steam when water boils in the appliance causes the connection between the spring terminals in the base connector and the terminal pins of the control to be broken. Clearly it is possible for either or both of the bimetal and the steam sensor to operate on either or both of the current carrying terminal pins so as to break their connection to the respective leaf spring or springs.

The precise nature of the mechanical coupling that is provided between the bimetal of the thus modified X12 control and the terminal pins/leaf springs connections and that may also be provided between the steam sensor and the terminal pins/leaf springs connections is not the essence of this feature of the present invention, and nor is the precise nature of the control device itself. This feature of the invention is not applicable only to modified X12 controls, though such a modified control is seen as possessing advantageous features, and is not restricted to bimetallic controls. The essence of this feature of the present invention is that in a cordless appliance wherein the appliance part has protective controls, the same contacts as are used to supply power through the base to the appliance proper are also used to perform circuit disconnection as a result of the function or functions of the protective control.

## Claims (Claims for the following Contracting State(s): AT, BE, CH, LI, DK, ES, GR, IT, LU, NL, SE)

1. A base connector for a cordless electrical appliance, said connector comprising shuttered spring terminals (10,11,12) within an upstand (2) adapted to mate with a connector part (1) of the appliance when the appliance part is operatively seated on the base, the upstand (2) having apertures (13,14,15) shaped to receive elongate terminal pins (4,5,6) of the appliance connector part when such pins are moved generally transversely to their length for effecting said mating, said apertures (13,14,15) being shuttered (8) for inhibiting access to said spring terminals (10,11,12) when the appliance part is not operatively seated on the base and the shutter(s) (8) being arranged to be displaced as the appliance part is moved into operative relationship with the base, and the spring terminals (10,11,12) being adapted to engage said terminal pins (4,5,6) when the same are received within said apertures (13,14,15) and the connector part is operatively seated on the base.

2. A connector as claimed in claim 1 wherein the spring terminals (10,11,12) are arranged to co-operate with the shutter(s) (8) such that as the shutter(s) (8) are displaced the spring terminals (10,11,12) are moved into contact with the terminal pins (4,5,6).

3. A connector as claimed in claim 2 wherein the movement of the spring terminals (10,11,12) into contact with the terminal pins (4,5,6) is in a direction generally transverse to the direction of movement of the terminal pins for mating the appliance connector part with the base connector.

4. A connector as claimed in claim 2 or 3 wherein the spring terminals (10,11,12) are constituted by cantilevered leaf springs each adapted to make contact with the end of a respective one of said elongate terminal pins (4,5,6).

5. A connector as claimed in claim 4 wherein the cantilevered leaf springs (10,11,12) are formed of a base metal (eg. brass) and carry silver contacts (37) for engaging the terminal pins (4,5,6) of the appliance part.

6. A connector as claimed in claim 4 or 5 wherein the cantilevered leaf springs (10,11,12) extend generally in the direction of movement of the terminal pins (4,5,6) for mating the appliance connector part with the base connector.

7. A connector as claimed in any of the preceding claims wherein said terminal pins (4,5,6) comprise live, neutral and earth pins and a common shutter (8) is provided for shuttering corresponding apertures (13,14,15) in the upstand (2), the shutter (8) being arranged to be displaced by the earth pin (6).

8. A connector as claimed in claim 7 wherein the arrangement of the shutter (8) is such that it cannot be opened by forces applied through the apertures (13,14) that are accessed by the live and neutral pins (4,5).

9. A connector as claimed in any of the preceding claims wherein the shutter (8) is arranged to interact with the spring terminals (10,11,12) in such a manner that the spring terminals (10,11,12) initially oppose the opening movement of the shutter (8) and thereafter assist in its opening.

10. A connector as claimed in any of the preceding claims wherein the apertures (13,14,15) in the upstand (2) extend into adjoining forward and upper surfaces (16,17) of the upstand (2) so as to facilitate mating of the appliance part connector with the base connector.

11. A connector as claimed in any of the preceding claims wherein the upstand (2) is defined by a moulded plastics housing (30) and a moulded plastics member (31) fits into said housing (30) and defines accommodation therein for the spring terminals (10,11,12) and the shutter(s) (8), the moulded plastics member (31) being arranged to form a sub-assembly with the spring terminals (10,11,12) and the shutter(s) (8) and having wall portions which separate the spring terminals (10,11,12) from one another and from the shutter(s) (8).

12. A connector as claimed in any of the preceding claims and wherein a cable attachment means (43;61) is provided as an integral part of the connector.

13. A connector as claimed in claim 12 and wherein the cable attachment means (43;61) comprises a pair of opposed toothed formations provided on an extended portion (41) of the connector, the arrangement being such that a cable to be connected to the connector can be lodged tightly between said formations.

14. A connector as claimed in claim 13 and wherein the cable attachment means (61) further comprises a post (63) around which the cable or one or more of its conductors can be turned.

15. A cordless electrical appliance wherein the base part of the appliance has a connector as claimed in any of the preceding claims.

16. A cordless electrical appliance as claimed in claim 15 wherein the connector that is provided on the appliance part is a conventional three pin connector with the three pins (4,5,6) extending generally horizontally.

17. A cordless electrical appliance as claimed in claim 15 or 16 wherein the appliance part comprises an electrically heated water boiling vessel.

18. A cordless electrical appliance as claimed in any of claims 15 to 17 wherein the terminal pins (4,5,6) of the appliance part connector are formed of copper or of a copper alloy having a thermal conductivity approaching that of copper and have a thick film layer of silver with a small amount of antimony.

19. A cordless electrical appliance as claimed in claim 18 wherein the silver/antimony layer has a thickness of at least 30 microns.

20. A cordless electrical appliance as claimed in claim 18 or 19 wherein the silver layer includes about 1% of antimony.

21. A cordless electrical appliance as claimed in any of claims 15 to 20 wherein a control on the appliance part is arranged to determine the ability of the base unit connector to effect electrical connection to the appliance part connector.

22. A cordless electrical appliance as claimed in any of claims 13 to 20 wherein the appliance part has a protective control and the same contacts as are used to supply power through the base unit to the appliance part are also used to perform circuit disconnection as a result of the functioning of the protective control.

## Claims (Claims for the following Contracting State(s): DE, FR, GB)

1. A base connector for a cordless electrical appliance, said connector comprising shuttered spring terminals (10,11,12) within an upstand (2) adapted to mate with a connector part (1) of the appliance when the appliance part is operatively seated on the base, the upstand (2) having apertures (13,14,15) shaped to receive elongate terminal pins (4,5,6) of the appliance connector part when such pins are moved generally transversely to their length for effecting said mating, said apertures (13,14,15) being shuttered (8) for inhibiting access to said spring terminals (10,11,12) when the appliance part is not operatively seated on the base and the shutter(s) (8) being arranged to be displaced as the appliance part is moved into operative relationship with the base, and the spring terminals (10,11,12) being adapted to engage said terminal pins (4,5,6) when the same are received within said apertures (13,14,15) and the connector part is operatively seated on the base, the spring terminals (10,11,12) being constituted by cantilevered leaf springs each adapted to make contact with the end of a respective one of said elongate terminal pins (4,5,6), and the spring terminals (10,11,12) being arranged to co-operate with the shutter(s) (8) such that as the shutter(s) (8) are displaced the spring terminals (10,11,12) are moved into contact with the terminal pins (4,5,6).

2. A connector as claimed in claim 1 wherein the movement of the spring terminals (10,11,12) into contact with the terminal pins (4,5,6) is in a direction generally transverse to the direction of movement of the terminal pins for mating the appliance connector part with the base connector.

3. A connector as claimed in claim 1 or 2 wherein the cantilevered leaf springs (10,11,12) are formed of a base metal (eg. brass) and carry silver contacts (37) for engaging the terminal pins (4,5,6) of the appliance part.

4. A connector as claimed in any of the preceding claims wherein the cantilevered leaf springs (10,11,12) extend generally in the direction of movement of the terminal pins (4,5,6) for mating the appliance connector part with the base connector.

5. A connector as claimed in any of the preceding claims wherein said terminal pins (4,5,6) comprise live, neutral and earth pins and a common shutter (8) is provided for shuttering corresponding apertures (13,14,15) in the upstand, the shutter (8) being arranged to be displaced by the earth pin (6).

6. A connector as claimed in claim 5 wherein the arrangement of the shutter (8) is such that it cannot be opened by forces applied through the apertures (13,14) that are accessed by the live and neutral pins (4,5).

7. A connector as claimed in any of the preceding claims wherein the shutter (8) is arranged to interact with the spring terminals (10,11,12) in such a manner that the spring terminals (10,11,12) initially oppose the opening movement of the shutter (8) and thereafter assist in its opening.

8. A connector as claimed in any of the preceding claims wherein the apertures (13,14,15) in the upstand extend into adjoining forward and upper surfaces (16,17) of the upstand (2) so as to facilitate mating of the appliance part connector with the base connector.

9. A connector as claimed in any of the preceding claims wherein the upstand (2) is defined by a moulded plastics housing (30) and a moulded plastics member (31) fits into said housing (30) and defines accommodation therein for the spring terminals (10,11,12) and the shutter(s) (8), the moulded plastics member (31) being arranged to form a sub-assembly with the spring terminals (10,11,12) and the shutter(s) (8) and having wall portions which separate the spring terminals (10,11,12) from one another and from the shutter(s) (8)

10. A connector as claimed in any of the preceding claims and wherein a cable attachment means (43;61) is provided as an integral part of the connector.

11. A connector as claimed in claim 10 and wherein the cable attachment means (43;61) comprises a pair of opposed toothed formations provided on an extended portion (41) of the connector, the arrangement being such that a cable to be connected to the connector can be lodged tightly between said formations.

12. A connector as claimed in claim 11 and wherein the cable attachment means (61) further comprises a post (63) around which the cable or one or more of its conductors can be turned.

13. A cordless electrical appliance wherein the base part of the appliance has a connector as claimed in any of the preceding claims.

14. A cordless electrical appliance as claimed in claim 13 wherein the connector that is provided on the appliance part is a conventional three pin connector with the three pins (4,5,6) extending generally horizontally.

15. A cordless electrical appliance as claimed in claim 13 or 14 wherein the appliance part comprises an electrically heated water boiling vessel.

16. A cordless electrical appliance as claimed in any of claims 13 to 15 wherein the terminal pins (4,5,6) of the appliance part connector are formed of copper or of a copper alloy having a thermal conductivity approaching that of copper and have a thick film layer of silver with a small amount of antimony.

17. A cordless electrical appliance as claimed in claim 16 wherein the silver/antimony layer has a thickness of at least 30 microns.

18. A cordless electrical appliance as claimed in claim 16 or 17 wherein the silver layer includes about 1% of antimony.

19. A cordless electrical appliance as claimed in any of claims 13 to 18 wherein a control on the appliance part is arranged to determine the ability of the base unit connector to effect electrical connection to the appliance part connector.

20. A cordless electrical appliance as claimed in any of claims 13 to 18 wherein the appliance part has a protective control and the same contacts as are used to supply power through the base unit to the appliance part are also used to perform circuit disconnection as a result of the functioning of the protective control.

## Patentansprüche (Patentansprüche für folgende(n) Vertragsstaat(en): AT, BE, CH, LI, DK, ES, GR, IT, LU, NL, SE)

1. Sockelverbinder für ein schnurloses, elektrisches Gerät, wobei der Verbinder abgedeckte Federanschlüsse (10, 11, 12) innerhalb einer Erhebung (2) umfaßt, die zum Zusammenfügen mit einem Verbinderteil (1) des Geräts, wenn das Geräteteil im Betrieb auf dem Sockel sitzt, eingerichtet ist und Öffnungen (13, 14, 15) aufweist, die zur Aufnahme länglicher Anschlußstifte (4, 5, 6) des Geräteverbinderteils, wenn diese Stifte bei dem genannten Zusammenfügen im wesentlichen quer zu ihrer Längsrichtung bewegt werden, ausgebildet sind und zur Vermeidung von Zugriff auf die Federanschlüsse (10, 11, 12), wenn das Geräteteil im Betrieb nicht auf dem Sockel sitzt, abgedeckt (8) sind, wobei die Abdeckung(en) (8) so angeordnet sind, daß sie sich verschieben, wenn das Geräteteil bezüglich des Sockels in Betriebsanordnung bewegt wird, und wobei die Federanschlüsse (10, 11, 12) zum Angriff an die Anschlußstifte (4, 5, 6), wenn diese von den Öffnungen (13, 14, 15) aufgenommen werden und das Verbinderteil im Betrieb auf dem Sockel sitzt, eingerichtet sind.

2. Verbinder nach Anspruch 1, wobei die Federanschlüsse (10, 11, 12) so angeordnet sind, daß sie unter Zusammenwirkung mit den Abdeckung(en) (8) in Kontakt mit den Anschlußstiften (4, 5, 6) bewegt werden, wenn sich die Abdeckung(e) (8) verschieben.

3. Verbinder nach Anspruch 2, wobei die Bewegung der Federanschlüsse (10, 11, 12) in Kontakt mit den Anschlußstiften (4, 5, 6) im wesentlichen quer zur Bewegungsrichtung der Anschlußstifte beim Zusammenfügen des Geräteverbinderteils mit dem Sockelverbinder erfolgt.

4. Verbinder nach Anspruch 2 oder 3, wobei die Federanschlüsse (10, 11, 12) von einseitig eingespannten Blattfedern gebildet werden, die so eingerichtet sind, daß sie jeweils mit dem Ende eines entsprechenden länglichen Anschlußstifts (4, 5, 6) Kontakt geben.

5. Verbinder nach Anspruch 4, wobei die einseitig eingespannten Blattfedern (10, 11, 12) aus einem unedlen Metall (beispielsweise Messing) gebildet sind und Silberkontakte (37) zum Angriff an die Anschlußstifte (4, 5, 6) des Geräteteils tragen.

6. Verbinder nach Anspruch 4 oder 5, wobei sich die einseitig eingespannten Blattfedern (10, 11, 12) im wesentlichen entlang der Bewegungsrichtung der Anschlußstifte (4, 5, 6) beim Zusammenfügen des Geräteverbinderteils mit dem Sockelverbinder erstrecken.

7. Verbinder nach einem der vorhergehenden Ansprüche, wobei die Anschlußstifte (4, 5, 6) einen Phase-, einen Nulleiter- und einen Erdungsstift umfassen und eine gemeinsame Abdeckung (8) zum Abdecken entsprechender Öffnungen (13, 14, 15) in der Erhebung (2) vorgesehen ist, die zur Verschiebung durch den Erdungsstift (6) eingerichtet ist.

8. Verbinder nach Anspruch 7, wobei die Abdeckung (8) so eingerichtet ist, daß sie von Kräften, die durch die Öffnungen für den Zugriff durch den Phase- und den Nulleiterstift (4, 5) angelegt werden, nicht geöffnet werden kann.

9. Verbinder nach einem der vorhergehenden Ansprüche, wobei die Abdeckung (8) mit den Federanschlüssen (10, 11, 12) so zusammenwirkt, daß diese zunächst einer Öffnungsbewegung der Abdeckung (8) entgegenwirken und danach deren Öffnung unterstützen.

10. Verbinder nach einem der vorhergehenden Ansprüche, wobei sich die Öffnungen (13, 14, 15) in der Erhebung (2) in aneinander angrenzende vorwärts und aufwärts gewandte Flächen (16, 17) der Erhebung (2) erstrecken, um das Zusammenfügen des Geräteteilverbinders mit dem Sockelverbinder zu erleichtern.

11. Verbinder nach einem der vorhergehenden Ansprüche, wobei die Erhebung (2) von einem gespritzten Kunststoffgehäuse (30) gebildet ist und ein gespritztes Kunststoffelement (31) in das Gehäuse (30) eingepaßt ist und darin eine Aufnahme für die Federanschlüsse (10, 11, 12) und die Abdeckung(en) (8) bildet, und wobei das gespritzte Kunststoffelement (31) eine Unter-Baugruppe mit den Federanschlüssen (10, 11, 12) und den Abdeckung(en) (8) bildet und Wandabschnitte aufweist, die die Federanschlüsse (10, 11, 12) von einander und von den Abdeckungen(en) (8) trennen.

12. Verbinder nach einem der vorhergehenden Ansprüche, wobei als einstückiges Teil mit dem Verbinder eine Kabelbefestigungseinrichtung (43; 61) vorgesehen ist.

13. Verbinder nach Anspruch 12, wobei die Kabelbefestigungseinrichtung (43; 61) auf einem verlängerten Abschnitt (41) des Verbinders ein Paar einander gegenüberliegender Zahnanordnungen aufweist, zwischen denen ein an den Verbinder anzuschließendes Kabel eng befestigt werden kann.

14. Verbinder nach Anspruch 13, wobei die Kabelbefestigungseinrichtung (61) einen Stiel (63) aufweist, um den das Kabel oder einer oder mehrere seiner Leiter gewunden werden können.

15. Schnurloses elektrisches Gerät, dessen Sockelteil einen Verbinder nach einem der vorhergehenden Ansprüche aufweist.

16. Gerät nach Anspruch 15, wobei der am Geräteteil vorgesehene Verbinder einen gewöhnlichen Dreistiftverbinder darstellt, dessen drei Stifte (4, 5, 6) sich im wesentlichen horizontal erstrecken.

17. Gerät nach Anspruch 15 oder 16, wobei das Geräteteil einen elektrisch geheizten Wasserkocherkessel aufweist.

18. Gerät nach einem der Ansprüche 15 bis 17, wobei die Anschlußstifte (4, 5, 6) des Geräteteilverbinders aus Kupfer oder einer Kupferlegierung mit einer an die Wärmeleitfähigkeit von Kupfer angenäherten Wärmeleitfähigkeit gebildet sind und eine Dickfilmschicht aus Silber mit einer kleinen Menge Antimon aufweisen.

19. Gerät nach Anspruch 18, wobei die Silber/Antimon-Schicht eine Dicke von mindestens 30 Mikrometer aufweist.

20. Gerät nach Anspruch 18 oder 19, wobei die Silberschicht 1 % Antimon enthält.

21. Gerät nach einem der Ansprüche 15 bis 20, wobei auf dem Geräteteil ein Betätiger angeordnet ist, um die Fähigkeit des Sockeleinheitsverbinders, eine elektrische Verbindung mit dem Geräteteilverbinder zu bewirken, zu bestimmen.

22. Gerät nach einem der Ansprüche 15 bis 20, wobei das Geräteteil einen Schutzbetätiger aufweist und die gleichen Kontakte, die zur Stromversorgung durch die Sockeleinheit an das Geräteteil dienen, auch zur Stromkreisunterbrechung infolge eines Ansprechens des Schutzbetätigers verwendet werden.

## Patentansprüche (Patentansprüche für folgende(n) Vertragsstaat(en): DE, FR, GB)

1. Sockelverbinder für ein schnurloses, elektrisches Gerät, wobei der Verbinder abgedeckte Federanschlüsse (10, 11, 12) innerhalb einer Erhebung (2) aufweist, die zum Zusammenfügen mit einem Verbinderteil (1) des Geräts, wenn das Geräteteil im Betrieb auf dem Sockel sitzt, eingerichtet ist und Öffnungen (13, 14, 15) aufweist, die zur Aufnahme länglicher Anschlußstifte (4, 5, 6) des Geräteverbinderteils, wenn diese Stifte bei dem Zusammenfügen im wesentlichen quer zu ihrer Längsrichtung bewegt werden, ausgeformt sind und zum Verhindern von Zugriff zu den Federanschlüssen (10, 11, 12), wenn das Geräteteil nicht betriebsmäßig auf dem Sockel sitzt, abgedeckt (8) sind, wobei die Abdeckung(en) (8) so eingerichtet sind, daß sie sich verschieben, wenn das Geräteteil bezüglich des Sockels in Betriebsanordnung bewegt wird, und wobei die Federanschlüsse (10, 11, 12) zum Angriff an die Anschlußstifte (4, 5, 6), wenn diese von den Öffnungen (13, 14, 15) aufgenommen werden und das Verbinderteil im Betrieb auf dem Sokkel sitzt, eingerichtet sind, wobei die Federanschlüsse (10, 11, 12) von einseitig eingespannten Blattfedern gebildet sind, die jeweils für den Kontakt mit dem Ende eines entsprechenden länglichen Anschlußstifts (4, 5, 6) eingerichtet sind, und wobei die Federanschlüsse (10, 11, 12) zum Zusammenwirken mit den Abdeckung(en) (8) so, daß sich die Federanschlüsse (10, 11, 12) bei Verschiebung der Abdeckung(en) (8) in Kontakt mit den Anschlußstiften (4, 5, 6) bewegen, eingerichtet sind.

2. Verbinder nach Anspruch 1, wobei die Bewegung der Federanschlüsse (10, 11, 12) in Kontakt mit den Anschlußstiften (4, 5, 6) im wesentlichen quer zur Bewegungsrichtung der Anschlußstifte beim Zusammenfügen des Geräteverbinderteils mit dem Sockelverbinder erfolgt.

3. Verbinder nach Anspruch 1 oder 2, wobei die einseitig eingespannten Blattfedern (10, 11, 12) aus einem unedlen Metall (beispielsweise Messing) gebildet sind und Silberkontakte (37) zum Angriff an die Anschlußstifte (4, 5, 6) des Geräteteils tragen.

4. Verbinder nach einem der vorhergehenden Ansprüche, wobei sich die einseitig eingespannten Blattfedern (10, 11, 12) im wesentlichen entlang der Bewegungsrichtung der Anschlußstifte (4, 5, 6) beim Zusammenfügen des Geräteverbinderteils mit dem Sockelverbinder erstrecken.

5. Verbinder nach einem der vorhergehenden Ansprüche, wobei die Anschlußstifte (4, 5, 6) einen Phase-, einen Nulleiter- und einen Erdungsstift umfassen und eine gemeinsame Abdeckung (8) zum Abdecken entsprechender Öffnungen (13, 14, 15) in der Erhebung (2) vorgesehen ist, die zur Verschiebung durch den Erdungsstift (6) eingerichtet ist.

6. Verbinder nach Anspruch 5, wobei die Abdeckung (8) so eingerichtet ist, daß sie von Kräften, die durch die Öffnungen für den Zugriff durch den Phase- und den Nulleiterstift (4, 5) angelegt werden, nicht geöffnet werden kann.

7. Verbinder nach einem der vorhergehenden Ansprüche, wobei die Abdeckung (8) mit den Federanschlüssen (10, 11, 12) so zusammenwirkt, daß diese zunächst einer Öffnungsbewegung der Abdeckung (8) entgegenwirken und danach deren Öffnung unterstützen.

8. Verbinder nach einem der vorhergehenden Ansprüche, wobei sich die Öffnungen (13, 14, 15) in der Erhebung in aneinander angrenzende vorwärts und aufwärts gewandte Flächen (16, 17) der Erhebung (2) erstrecken, um das Zusammenfügen des Geräteteilverbinders mit dem Sockelverbinder zu erleichtern.

9. Verbinder nach einem der vorhergehenden Ansprüche, wobei die Erhebung (2) von einem gespritzten Kunststoffgehäuse (30) gebildet ist und ein gespritztes Kunststoffelement (31) in das Gehäuse (30) eingepaßt ist und darin eine Aufnahme für die Federanschlüsse (10, 11, 12) und die Abdeckung(en) (8) bildet, und wobei das gespritzte Kunststoffelement (31) eine Unter-Baugruppe mit den Federanschlüssen (10, 11, 12) und den Abdeckung(en) (8) bildet und Wandabschnitte aufweist, die die Federanschlüsse (10, 11, 12) von einander und von den Abdeckungen(en) (8) trennen.

10. Verbinder nach einem der vorhergehenden Ansprüche, wobei als einstückiges Teil mit dem Verbinder eine Kabelbefestigungseinrichtung (43; 61) vorgesehen ist.

11. Verbinder nach Anspruch 10, wobei die Kabelbefestigungseinrichtung (43; 61) auf einem verlängerten Abschnitt (41) des Verbinders ein Paar einander gegenüberliegender Zahnanordnungen aufweist, zwischen denen ein an den Verbinder anzuschließendes Kabel eng befestigt werden kann.

12. Verbinder nach Anspruch 11, wobei die Kabelbefestigungseinrichtung (61) einen Stiel (63) aufweist, um den das Kabel oder einer oder mehrere seiner Leiter gewunden werden können.

13. Schnurloses elektrisches Gerät, dessen Sockelteil einen Verbinder nach einem der vorhergehenden Ansprüche aufweist.

14. Gerät nach Anspruch 13, wobei der am Geräteteil vorgesehene Verbinder einen gewöhnlichen Dreistiftverbinder darstellt, dessen drei Stifte (4, 5, 6) sich im wesentlichen horizontal erstrecken.

15. Gerät nach Anspruch 13 oder 14, wobei das Geräteteil einen elektrisch geheizten Wasserkocherkessel aufweist.

16. Gerät nach einem der Ansprüche 13 bis 15, wobei die Anschlußstifte (4, 5, 6) des Geräteteilverbinders aus Kupfer oder einer Kupferlegierung mit einer an die Wärmeleitfähigkeit von Kupfer angenäherten Wärmeleitfähigkeit gebildet sind und eine Dickfilmschicht aus Silber mit einer kleinen Menge Antimon aufweisen.

17. Gerät nach Anspruch 16, wobei die Silber/Antimon-Schicht eine Dicke von mindestens 30 Mikrometernn aufweist.

18. Gerät nach Anspruch 16 oder 17, wobei die Silberschicht 1 % Antimon enthält.

19. Gerät nach einem der Ansprüche 13 bis 18, wobei auf dem Geräteteil ein Betätiger angeordnet ist, um die Fähigkeit des Sockeleinheitsverbinders, eine elektrische Verbindung mit dem Geräteteilverbinder zu bewirken, zu bestimmen.

20. Gerät nach einem der Ansprüche 13 bis 18, wobei das Geräteteil einen Schutzbetätiger aufweist und die gleichen Kontakte, die zur Stromversorgung durch die Sockeleinheit an das Geräteteil dienen, auch zur Stromkreisunterbrechung infolge eines Ansprechens des Schutzbetätigers verwendet werden.

## Revendications (Revendications pour l'(les) Etat(s) contractant(s) suivant(s): AT, BE, CH, LI, DK, ES, GR, IT, LU, NL, SE)

1. Connecteur de base pour appareil électrique sans fil, ce connecteur comprenant des bornes (10, 11, 12) formant ressorts protégées à l'intérieur d'un élément vertical (2) adapté à se raccorder à une partie (1) de connexion de l'appareil lorsque la partie de l'appareil est posée de manière opérante sur la base, l'élément vertical (2) comportant des ouvertures (13, 14, 15) conformées de manière à recevoir des broches formant bornes allongées (4, 5, 6) de la partie de connexion de l'appareil lorsque ces broches sont déplacées d'une manière générale perpendiculairement à leur longueur pour effectuer ce raccordement, les ouvertures (13, 14, 15) étant protégées (8) pour empêcher l'accès aux bornes formant ressorts (10, 11, 12) lorsque la partie de l'appareil n'est pas posée de manière opérante sur la base, la (les) protection(s) (8) étant disposée(s) de façon à être déplacée(s) lorsque la partie de l'appareil est déplacée jusqu'à venir en relation opérante avec la base, et les bornes formant ressorts (10, 11, 12) étant adaptées à venir en prise avec les broches formant bornes (4, 5, 6) lorsque ces dernières sont reçues à l'intérieur desdites ouvertures (13, 14, 15) et que la partie de connexion est posée de façon opérante sur la base.

2. Connecteur selon la revendication 1, dans lequel les bornes formant ressorts (10, 11, 12) sont disposées de façon à coopérer avec la (les) protection(s) (8) de manière telle que lorsque l'on déplace la (les) protection(s) (8), les bornes formant ressorts (10, 11, 12) sont déplacées jusqu'à venir en contact avec les broches formant bornes (4, 5, 6).

3. Connecteur selon la revendication 2, dans lequel le déplacement des bornes formant ressorts (10, 11, 12) jusqu'à venir en contact avec les broches formant bornes (4, 5, 6) s'effectue dans une direction qui est d'une manière générale perpendiculaire à la direction de déplacement des broches formant bornes pour raccorder la partie de connexion de l'appareil au connecteur de base.

4. Connecteur selon la revendication 2 ou 3, dans lequel les bornes formant ressorts (10, 11, 12) sont constituées par des ressorts à lame en porte-à-faux qui sont chacun respectivement adaptés à faire contact avec l'extrémité de la broche formant borne (4, 5, 6) allongée correspondante.

5. Connecteur selon la revendication 4, dans lequel les ressorts à lame en porte-à-faux (10, 11, 12) sont formés en un métal de base (par exemple laiton) et portent des contacts (37) en argent pour venir en prise avec les broches formant bornes (4, 5, 6) de la partie de l'appareil.

6. Connecteur selon la revendication 4 ou 5, dans lequel les ressorts à lame en porte-à-faux (10, 11, 12) s'étendent d'une manière générale dans la direction du déplacement des broches formant bornes (4, 5, 6) pour raccorder la partie de connexion de l'appareil au connecteur de base.

7. Connecteur selon l'une quelconque des revendications précédentes, dans lequel les broches formant bornes (4, 5, 6) comprennent des broches sous tension, de neutre et de terre, et une protection commune (8) est prévue pour protéger les ouvertures correspondantes (13, 14, 15) dans l'élément vertical (2), la protection (8) étant disposée de façon à être déplacée par la broche de terre (6).

8. Connecteur selon la revendication 7, dans lequel la protection (8) est disposée de façon telle qu'elle ne peut pas être ouverte par des forces appliquées à travers les ouvertures (13, 14) qui servent d'accès aux broches sous tension et de neutre (4, 5).

9. Connecteur selon l'une quelconque des revendications précédentes, dans lequel la protection (8) est disposée de façon à coopérer avec les bornes formant ressorts (10, 11, 12) de façon telle que les bornes formant ressorts (10, 11, 12) s'opposent initialement au déplacement d'ouverture de la protection (8), puis aident à cette ouverture.

10. Connecteur selon l'une quelconque des revendications précédentes, dans lequel les ouvertures (13, 14, 15) dans l'élément vertical (2) s'étendent dans des surfaces adjacentes avant et supérieure (16, 17) de l'élément vertical (2) de façon à faciliter le raccordement du connecteur de la partie de l'appareil et du connecteur de base.

11. Connecteur selon l'une quelconque des revendications précédentes, dans lequel l'élément vertical (2) est défini par une enveloppe (30) en matière plastique moulée, et un élément (31) en matière plastique moulée s'adapte à l'intérieur de l'enveloppe (30) et définit dans celle-ci des logements pour les bornes formant ressorts (10, 11, 12) et la (les) protection(s) (8), l'élément (31) en matière plastique moulée étant ménagé de façon à former un sous-ensemble avec les bornes formant ressorts (10, 11, 12) et la (les) protection(s) (8), et présentant des tronçons de parois qui séparent les bornes formant ressorts (10, 11, 12) l'une de l'autre et de la (des) protection(s) (8).

12. Connecteur selon l'une quelconque des revendications précédentes, dans lequel des moyens (43 ; 61) pour attacher un câble sont prévus d'un seul tenant avec le connecteur.

13. Connecteur selon la revendication 12, dans lequel les moyens (43 ; 61) pour attacher un câble comprennent deux conformations opposées pourvues de dents et ménagées sur une partie (41) prolongée du connecteur, la disposition étant telle qu'un câble à relier au connecteur puisse être reçu de façon serrée entre ces conformations.

14. Connecteur selon la revendication 13, dans lequel les moyens (61) pour attacher un câble comprennent en outre un téton (63) autour duquel on peut enrouler le câble ou un ou plusieurs des conducteurs de celui-ci.

15. Appareil électrique sans fil, dans lequel la partie de base de l'appareil comporte un connecteur selon l'une quelconque des revendications précédentes.

16. Appareil électrique sans fil selon la revendication 15, dans lequel le connecteur qui est prévu sur la partie de l'appareil est un connecteur classique à trois broches, les trois broches (4, 5, 6) s'étendant d'une manière générale horizontalement.

17. Appareil électrique sans fil selon la revendication 15 ou 16, dans lequel la partie de l'appareil comprend un récipient chauffé électriquement pour faire bouillir de l'eau.

18. Appareil électrique sans fil selon l'une quelconque des revendications 15 à 17, dans lequel les broches formant bornes (4, 5, 6) du connecteur de la partie de l'appareil sont réalisées en cuivre ou en un alliage de cuivre ayant une conductivité thermique voisine de celle du cuivre, et présentent une couche mince en forme de pellicule d'argent avec une petite quantité d'antimoine.

19. Appareil électrique sans fil selon la revendication 18, dans lequel la couche d'argent/antimoine a une épaisseur d'au moins 30 microns.

20. Appareil électrique sans fil selon la revendication 18 ou 19, dans lequel la couche d'argent comprend environ 1% d'antimoine.

21. Appareil électrique sans fil selon l'une quelconque des revendications 15 à 20, dans lequel est ménagé un contrôle de la partie de l'appareil pour déterminer la capacité du connecteur de l'unité formant base à effectuer la connexion électrique avec le connecteur de la partie de l'appareil.

22. Appareil électrique sans fil selon l'une quelconque des revendications 13 à 20, dans lequel la partie de l'appareil comporte un contrôle de protection, et les mêmes contacts qui sont utilisés pour amener le courant par l'unité formant base à la partie de l'appareil, sont également utilisés pour effectuer une coupure du circuit par suite du fonctionnement du contrôle de protection.

## Revendications (Revendications pour l'(les) Etat(s) contractant(s) suivant(s): DE, FR, GB)

1. Connecteur de base pour appareil électrique sans fil, ce connecteur comprenant des bornes (10, 11, 12) formant ressorts protégées à l'intérieur d'un élément vertical (2) adapté à se raccorder à une partie (1) de connexion de l'appareil lorsque la partie de l'appareil est posée de manière opérante sur la base, l'élément vertical (2) comportant des ouvertures (13, 14, 15) conformées de manière à recevoir des broches formant bornes allongées (4, 5, 6) de la partie formant connecteur de l'appareil lorsque ces broches sont déplacées d'une manière générale perpendiculairement à leur longueur pour effectuer ce raccordement, les ouvertures (13, 14, 15) étant protégées (8) pour empêcher l'accès aux bornes formant ressorts (10, 11, 12) lorsque la partie de l'appareil n'est pas posée de manière opérante sur la base, la (les) protection(s) (8) étant disposée(s) de façon à être déplacée(s) lorsque la partie de l'appareil est déplacée jusqu'à venir en relation opérante avec la base, et les bornes formant ressorts (10, 11, 12) étant adaptées à venir en prise avec les broches formant bornes (4, 5, 6) lorsque ces dernières sont reçues à l'intérieur desdites ouvertures (13, 14, 15) et que la partie de connexion est posée de façon opérante sur la base, les bornes formant ressort s(10, 11, 12) étant constituées par des ressorts à lame en porte-à-faux qui sont chacun respectivement adaptés à faire contact avec l'extrémité de la broche formant borne (4, 5, 6) allongée correspondante, et les bornes formant ressorts (10, 11, 12) étant disposées de façon à coopérer avec la (les) protection(s) (8) de manière telle que lorsque l'on déplace la (les) protection(s) (8), les bornes formant ressorts (10, 11, 12) sont déplacées jusqu'à venir en contact avec les broches formant bornes (4, 5, 6).

2. Connecteur selon la revendication 1, dans lequel le déplacement des bornes formant ressorts (10, 11, 12) jusqu'à venir en contact avec les broches formant bornes (4, 5, 6) s'effectue dans une direction qui est d'une manière générale perpendiculaire à la direction de déplacement des broches formant bornes pour raccorder la partie de connexion de l'appareil au connecteur de base.

3. Connecteur selon la revendication 2, dans lequel les ressorts à lame en porte-à-faux (10, 11, 12) sont formés en un métal de base (par exemple laiton) et portent des contacts (37) en argent pour venir en prise avec les broches formant bornes (4, 5, 6) de la partie de l'appareil.

4. Connecteur selon la revendication 2 ou 3, dans lequel les ressorts à lame en porte-à-faux (10, 11, 12) s'étendent d'une manière générale dans la direction du déplacement des broches formant bornes (4, 5, 6) pour raccorder la partie de connexion de l'appareil au connecteur de base.

5. Connecteur selon l'une quelconque des revendications précédentes, dans lequel les broches formant bornes (4, 5, 6) comprennent des broches sous tension, de neutre et de terre, et une protection commune (8) est prévue pour protéger les ouvertures correspondantes (13, 14, 15) dans l'élément vertical (2), la protection (8) étant disposée de façon à être déplacée par la broche de terre (6).

6. Connecteur selon la revendication 5, dans lequel la protection (8) est disposée de façon telle qu'elle ne peut pas être ouverte par des forces appliquées à travers les ouvertures (13, 14) qui servent d'accès aux broches sous tension et de neutre (4, 5).

7. Connecteur selon l'une quelconque des revendications précédentes, dans lequel la protection (8) est disposée de façon à coopérer avec les bornes formant ressorts (10, 11, 12) de façon telle que les bornes formant ressort (10, 11, 12) s'opposent initialement au déplacement d'ouverture de la protection (8), puis aident à cette ouverture.

8. Connecteur selon l'une quelconque des revendications précédentes, dans lequel les ouvertures (13, 14, 15) dans l'élément vertical (2) s'étendent dans des surfaces adjacentes avant et supérieure (16, 17) de l'élément vertical (2) de façon à faciliter le raccordement du connecteur de la partie de l'appareil et du connecteur de base.

9. Connecteur selon l'une quelconque des revendications précédentes, dans lequel l'élément vertical (2) est défini par une enveloppe (30) en matière plastique moulée, et un élément (31) en matière plastique moulée s'adapte à l'intérieur de l'enveloppe (30) et définit dans celle-ci des logements pour les bornes formant ressorts (10, 11, 12) et la (les) protection(s) (8), l'élément (31) en matière plastique moulée étant ménagé de façon à former un sous-ensemble avec les bornes formant ressorts (10, 11, 12) et la (les) protection(s) (8), et présentant des tronçons de parois qui séparent les bornes formant ressorts (10, 11, 12) l'une de l'autre et de la (des) protection(s) (8).

10. Connecteur selon l'une quelconque des revendications précédentes, dans lequel des moyens (43 ; 61) pour attacher un câble sont prévus d'un seul tenant avec le connecteur.

11. Connecteur selon la revendication 10, dans lequel les moyens (43 ; 61) pour attacher un câble comprennent deux conformations opposées pourvues de dents et ménagées sur une partie (41) prolongée du connecteur, la disposition étant telle qu'un câble à relier au connecteur puisse être reçu de façon serrée entre ces conformations.

12. Connecteur selon la revendication 11, dans lequel les moyens (61) pour attacher un câble comprennent en outre un téton (63) autour duquel on peut enrouler le câble ou un ou plusieurs des conducteurs de celui-ci.

13. Appareil électrique sans fil, dans lequel la partie de base de l'appareil comporte un connecteur selon l'une quelconque des revendications précédentes.

14. Appareil électrique sans fil selon la revendication 13, dans lequel le connecteur qui est prévu sur la partie de l'appareil est un connecteur classique à trois broches, les trois broches (4, 5, 6) s'étendant d'une manière générale horizontalement.

15. Appareil électrique sans fil selon la revendication 13 ou 14, dans lequel la partie de l'appareil comprend un récipient chauffé électriquement pour faire bouillir de l'eau.

16. Appareil électrique sans fil selon l'une quelconque des revendications 13 à 15, dans lequel les broches formant bornes (4, 5, 6) du connecteur de la partie de l'appareil sont réalisées en cuivre ou en un alliage de cuivre ayant une conductivité thermique voisine de celle du cuivre, et présentent une couche mince en forme de pellicule d'argent avec une petite quantité d'antimoine.

17. Appareil électrique sans fil selon la revendication 16, dans lequel la couche d'argent/antimoine a une épaisseur d'au moins 30 microns.

18. Appareil électrique sans fil selon la revendication 16 ou 17, dans lequel la couche d'argent comprend environ 1% d'antimoine.

19. Appareil électrique sans fil selon l'une quelconque des revendications 13 à 18, dans lequel est ménagé un contrôle de la partie de l'appareil pour déterminer la capacité du connecteur de l'unité formant base à effectuer la connexion électrique avec le connecteur de la partie de l'appareil.

20. Appareil électrique sans fil selon l'une quelconque des revendications 13 à 18, dans lequel la partie de l'appareil comporte un contrôle de protection, et les mêmes contacts qui sont utilisés pour amener le courant par l'unité formant base à la partie de l'appareil, sont également utilisés pour effectuer une coupure du circuit par suite du fonctionnement du contrôle de protection.
